# EUROPÄISCHE PATENTANMELDUNG

(11) **EP 0 616 294 A2**
(43) Veröffentlichungstag der Anmeldung: **21.09.1994**
(21) Anmeldenummer: 94103297.1
(22) Anmeldetag: 04.03.1994
(51) Int. Cl.: G06K 7/016, G06K 7/08

(54) **Verfahren zum Ermitteln binärer Informationen**

(30) Priorität: 18.03.1993 DE 4308696
(71) Anmelder: Siemens Nixdorf Informationssysteme Aktiengesellschaft, D-33102 Paderborn (DE)
(72) Erfinder: Behr, Hubert, D-33098 Paderborn (DE)
(74) Vertreter: Schaumburg, Thoenes & Thurn

(57) **Zusammenfassung**

Beschrieben wird ein Verfahren zum Ermitteln binärer Informationen, die auf der Magnetspur einer Magnetspeicherkarte in Form von Flußwechseln nach dem Zweifrequenzcode gespeichert sind, bei dem eine Relativbewegung zwischen der Magnetspeicherkarte und einem elektromagnetischen Wandler erzeugt wird, der eine durch eine Magnetflußänderung induzierte Spannung (U) abgibt. Es werden die Extremwerte (54-66) der Spannung (U) festgestellt, und das Auftreten der Extremwerte (54-66) in bezug auf eine durch den Zweifrequenzcode definierte Taktzeit (T) zur Informationsgewinnung wird ausgewertet. Ausgehend von einem zur Informationsgewinnung verwendeten Extremwert (58) werden die Zeitabstände (T1-T4) aufeinander folgender Extremwerte (60-66) gemessen und addiert. Der Extremwert (66), bei dem die Summe (S) annähernd der Taktzeit (T) entspricht, wird zur Informationsgewinnung ausgewertet.

## Beschreibung

Die Erfindung betrifft ein Verfahren zum Ermitteln binärer Informationen, die auf der Magnetspur einer Magnetspeicherkarte in Form von Flußwechseln nach dem Zweifrequenzcode gespeichert sind, bei dem eine Relativbewegung zwischen der Magnetspeicherkarte und einem elektromagnetischen Wandler erzeugt wird, der eine durch eine Magnetflußänderung induzierte Spannung abgibt, deren Extremwerte festgestellt werden, und bei dem das Auftreten der Extremwerte in bezug auf eine durch den Zweifrequenzcode definierte Taktzeit zur Informationsgewinnung ausgewertet wird.

Ein derartiges Verfahren ist aus der DE 40 06 426 A1 bekannt und ermöglicht die zuverlässige Auswertung magnetisch gespeicherter Informationen auch dann, wenn die Magnetspur in ihrer Aufzeichnungsqualität beeinträchtigt ist. Dieses bekannte Verfahren verwendet als Code den Zweifrequenzcode, dessen Struktur beispielsweise in der ISO-Norm 7811/2-1985 (E) beschrieben ist. Bei diesem Zweifrequenzcode sind Flußwechsel, d.h. magnetische Flüsse mit abwechselnden Vorzeichen der Magnetisierungsrichtungen, in festen Abständen in der Magnetspur eingeprägt. Um einen Binärwert 1 zu definieren, wird in der Mitte eines Abstandes ein weiterer Flußwechsel eingefügt. Fehlt dieser weitere Flußwechsel, so liegt der Binärwert 0 vor. Zum Auslesen der magnetischen Informationen wird die Magnetspur an einem elektromagnetischen Wandler mit annähernd konstanter Geschwindigkeit vorbeigeführt, wodurch im Wandler nach dem elektrodynamischen Prinzip eine Spannung induziert wird. Da die Magnetisierungsrichtungen aufeinander folgender Flußwechsel wechseln, sind in der Spannung Extremwerte enthalten, die der Informationsgewinnung zugeführt werden. Bei ordnungsgemäßer Magnetspur treten die einem Binärwert 0 zugeordneten Extremwerte in einer durch die Grundfrequenz des Zweifrequenzcode definierten Taktzeit auf. Ist ein weiterer Extremwert innerhalb einer Taktzeit vorhanden, d.h. dieser Extremwert hat eine höhere Frequenz, so wird dies als Binärwert 1 gewertet. Das Auftreten der Extremwerte in bezug auf die Taktzeit wird somit zur Informationsgewinnung genutzt.

Bei dem bekannten Verfahren wird im zeitlichen Abstand der Taktzeit die induzierte, analoge Spannung in Digitalwerte gewandelt und innerhalb eines vorgegebenen Zeitfensters auf Extremwerte untersucht. Ein festgestellter Extremwert wird dann mit einem zuvor ermittelten Extremwert verglichen und das Vergleichsergebnis zur Informationsgewinnung ausgewertet. Ein Nachteil dieses Verfahrens ist, daß eine Analog/Digital-Wandlung vorgenommen werden muß, die das Verfahren auch technisch aufwendig macht. Außerdem kann es vorkommen, daß innerhalb des wegen der Extremwerterfassung relativ großen Zeitfensters ein Störimpuls auftritt, der einen falschen Extremwert vortäuscht und zu einer fehlerhaften Information führt.

Es ist Aufgabe der Erfindung, ein Verfahren zum Ermitteln binärer Informationen anzugeben, das einfach realisiert werden kann und das bei Fehlern auf der Magnetspur, wie beispielsweise Kratzer, dennoch eine ordnungsgemäße Informationsgewinnung ermöglicht.

Diese Aufgabe wird für ein Verfahren eingangs genannter Art dadurch gelöst, daß ausgehend von einem zur Informationsgewinnung verwendeten Extremwert die Zeitabstände aufeinander folgender Extremwerte gemessen und addiert werden, und daß der Extremwert, bei dem die Summe annähernd der Taktzeit entspricht, zur Informationsgewinnung ausgewertet wird.

Durch die Erfindung wird erreicht, daß jeder in der Spannung enthaltene Extremwert, d.h. auch die von Störungen herrührenden Extremwerte, erfaßt werden. Es wird aber nur derjenige Extremwert der Informationsgewinnung zugeführt, der annähernd im zeitlichen Abstand der Taktzeit zum Extremwert auftritt, der zuvor zur Informationsgewinnung verwendet worden war. Durch das Aufsummieren der den einzelnen Extremwerten zugeordneten Zeitabstände kann anhand der ermittelten Summe entschieden werden, ob die Taktzeit in etwa erreicht ist und dadurch ein auszuwertender Extremwert vorliegt. Dies bedeutet, daß die innerhalb einer Taktzeit infolge von Störsignalen auftretenden Extremwerte bei der Informationsgewinnung unberücksichtigt bleiben. Da gegenüber dem bekannten Verfahren keine Analog/Digital-Wandlung durchgeführt werden muß und die bei der Erfindung erforderliche Zeitmessung sehr einfach ausgeführt werden kann, beispielsweise in einem Mikroprozessor, kann das Verfahren nach der Erfindung auf einfache Weise technisch realisiert werden. Die hierbei erforderlichen Hardwarebausteine, wie beispielsweise Diskriminatorbausteine, die das Auftreten von Extremwerten in der vom elektromagnetischen Wandler abgegebenen Spannung signalisieren, werden auch bei bekannten Einrichtungen zum Ermitteln binärer Informationen verwendet, so daß das vorliegende Verfahren ohne oder mit nur geringfügigen Änderungen der bereits vorhandenen Hardware eingesetzt werden kann.

Bei einer bevorzugten Ausführungsform der Erfindung wird derjenige Extremwert zur Informationsgewinnung ausgewertet, bei dem die Summe der Zeitabstände der Taktzeit am nächsten kommt. Diese Weiterbildung beruht auf der Überlegung, daß der der Informationsgewinnung zuzuführende Extremwert annähernd bei Ablauf der Taktzeit zu erwarten ist. Treten nun in der Nähe des Endes der Taktzeit mehrere Extremwerte auf, so ist die Wahrscheinlichkeit hoch, daß derjenige mit dem geringsten Zeitabstand zur Taktzeit der wahre Extremwert ist, der der Informationsgewinnung zugrundegelegt werden kann und von dem aus die nächste Informationsgewinnung zu starten ist. Durch diese Ausführungsform wird also erreicht, daß auch Störungen in der Umgebung des Taktzeitendes ohne Auswirkung auf die Ermittelung binärer Informationen bleibt.

Bei einem anderen Ausführungsbeispiel wird die jeweils ermittelte Summe der Zeitabstände als Taktzeit für die nächste Informationsgewinnung verwendet. Wenn sich beim Abtasten die Abtastgeschwindigkeit ändert, beispielsweise infolge von Gleichlaufschwankungen eines die Magnetspeicherkarte oder den elektromagnetischen Wandler bewegenden Motors, so verändern sich auch die zeitlichen Abstände zwischen den Flußwechseln, die mit der Grundfrequenz aufgezeichnet worden sind. Demgemäß ändert sich auch die Taktzeit. Eine solche Änderung kann anhand der Summe der Zeitabstände festgestellt werden. Wird nun diese Summe als Taktzeit für die nächste Informationsgewinnung verwendet, so ist die Abweichung der als nächstes ermittelten Summe von der Taktzeit minimal. Störsignale in der Umgebung des Taktzeitendes werden somit optimal unterdrückt.

Bei einem weiteren Ausführungsbeispiel ist vorgesehen, daß die gemessenen Zeitabstände in der Reihenfolge ihres Auftretens gespeichert werden und die Informationsgewinnung anhand der gespeicherten Zeitabstände vorgenommen wird. Dieses Ausführungsbeispiel kann besonders einfach bei Verwendung eines Mikroprozessors realisiert werden. Dieser enthält im allgemeinen einen Zeitgeber, der Zeitimpulse abgibt, die zur Zeitmessung von einem Zähler gezählt werden. Bei diesem Ausführungsbeispiel wird z.B. der Wert des Zählers beim Auftreten eines Extremwerts gespeichert. Im Speicher sind dann in Speicherzellen mit aufsteigender Adresse Zeitabstände gespeichert, die jeweils einem Extremwert zugeordnet sind. Die nach der Erfindung erforderliche Summenbildung kann sehr schnell und einfach ausgeführt werden, da auf einander benachbarte Speicherzellen zugegriffen werden kann.

Bei einem praktischen Ausführungsbeispiel wird jedem gespeicherten Zeitabstand eine Kennung zugeordnet, die die Richtung seines Extremwerts kennzeichnet. Die Kennung kann beispielsweise an einer vorgegebenen Bitstelle einer Speicherzelle vorgesehen werden, in die der jeweilige Zeitabstand eingeschrieben wird.

Eine Kennung "0" kennzeichnet z.B. die negative Richtung eines Extremwerts bzw. ein Minimum. Ein Binärwert "1" kennzeichnet die positive Richtung des Extremwerts bzw. ein Maximum. Die jeweilige Richtung des Extremwerts kann beispielsweise durch zwei Diskriminatorbausteine ermittelt werden, die positive bzw. negative Werte der vom Wandler abgegebenen Spannung auwerten.

Eine Weiterbildung des vorgenannten Ausführungsbeispiels ist dadurch gekennzeichnet, daß zur Informationsgewinnung die Kennung des Zeitabstands, bei dem die Summe annähernd der Taktzeit entspricht, mit der Kennung des Zeitabstands des zuvor zur Informationsgewinnung verwendeten Extremwerts verglichen wird, und daß bei Übereinstimmung der Kennungen der Binärwert 1 und bei fehlender Übereinstimmung der Binärwert 0 ausgegeben wird. Bei diesem Ausführungsbeispiel werden nur Extremwerte, die im Zeitabstand der Taktzeit auftreten, ausgewertet. Der mit der höheren Frequenz behaftete und innerhalb der Taktzeit auftretende Extremwert bleibt unberücksichtigt. Diese Art der Ermittlung der Binärwerte anhand eines Vergleichs der Kennungen der Zeitabstände kann sehr schnell und zuverlässig ausgeführt werden, da der Binärwert mit wenigen Verfahrensschritten ermittelt wird und von Störsignalen herrührende Extremwerte in einem relativ langen Zeitabstand unberücksichtigt bleiben.

Ein anderes Ausführungsbeispiel, das zur Ermittlung der Binärwerte nicht die Art der Extremwerte ausnutzt, ist dadurch gekennzeichnet, daß in einem innerhalb der Taktzeit liegenden Zeitfenster überprüft wird, ob ein Extremwert vorhanden ist oder nicht, und daß bei vorhandenem Extremwert der Binärwert 1 und bei fehlendem Extremwert der Binärwert 0 ausgegeben wird. Bei diesem Ausführungsbeispiel wird lediglich ein Diskriminatorbaustein zur Realisierung des Verfahrens benötigt, der unabhängig von der Richtung der Extremwerte jeweils einen Extremwert signalisiert.

Vorzugsweise wird das Zeitfenster in der Mitte der Taktzeit eingerichtet. Wird als neue Taktzeit für die nächste Informationsgewinnung die zuletzt ermittelte Summe der Zeitabstände verwendet, so ändert sich die Lage des Zeitfensters entsprechend einer Änderung der Taktzeit, beispielsweise infolge von Gleichlaufschwankungen eines die Abtastbewegung bewirkenden Motors. Da sich auch der zeitliche Abstand des innerhalb einer Taktzeit auftretenden Flußwechsels bzw. Extremwerts gleichsinnig mit einer Änderung der Taktzeit ändert, wird durch das Verschieben des Zeitfensters dieser Extremwert, der den Binärwert 1 signalisiert, zuverlässig erfaßt.

Eine vorteilhafte Weiterbildung sieht vor, daß die Länge des Zeitfensters abhängig von der Taktzeit eingestellt wird und vorzugsweise einen vorgegebenen Bruchteil, z.B. 1/20, der Taktzeit beträgt. Wenn sich gemäß dieser Vorgehensweise die Taktzeit ändert, so wird auch das Zeitfenster entsprechend verlängert oder verkürzt. Dadurch ist ein zuverlässiges Erfassen des in der Mitte einer Taktzeit auftretenden Extremwerts gewährleistet. In Weiterbildung des vorgenannten Ausführungsbeispiels wird die Länge des Zeitfensters abhängig von der Änderung der Taktzeit eingestellt. Bei diesem Ausführungsbeispiel kann die Länge des Zeitfensters als absoluter Wert oder als relativer Wert bezüglich der Taktzeit auf einen sehr kleinen Wert eingestellt werden. Die Ausschaltung von Störimpulsen ist dann maximal. Ändert sich nun die Taktzeit, beispielsweise beim Abtasten der Magnetspeicherkarte infolge von Gleichlaufschwankungen, so wird die Länge des Zeitfensters vergrößert. Dadurch wird sichergestellt, daß ein innerhalb der Taktzeit auftretender ordnungsgemäßer Extremwert zuverlässig erkannt und bei der Informationsgewinnung berücksichtigt wird. Wenn die Änderung anschließend gegen Null geht, d.h. es liegt eine stabile Abtastbewegung vor, so kann die Länge des Zeitfensters auf den ursprünglichen kleinen Wert zurückgenommen werden, wodurch sich die Störsicherheit des Verfahrens wieder erhöht.

Ein weiteres Ausführungsbeispiel ist dadurch gekennzeichnet, daß die Summe der Zeitabstände mit der Taktzeit verglichen wird, daß bei einer einen vorgegebenen Betrag überschreitenden Abweichung ein Extremwert am Ende der Taktzeit angenommen wird, der der Informationsgewinnung zugeführt wird. In der Praxis kann der fehlerhafte Zustand auftreten, daß ein im Zeitabstand einer Taktzeit vorgesehener Flußwechsel zerstört oder unleserlich ist. Dies bedeutet, daß an dieser Stelle der Magnetspeicherkarte kein Extremwert erzeugt wird. Diesem Zustand, der zu einem Informationsfehler führen kann, wird durch die vorgenannten Maßnahmen entgegengewirkt, indem ein Extremwert am Ende der Taktzeit angenommen wird. Die nächste Informationsgewinnung beginnt dann bei diesem angenommenen Extremwert.

Ausführungsbeispiele der Erfindung werden im folgenden anhand der Zeichnung erläutert. Darin zeigt
- Figur 1: eine Magnetkarte mit einem vergrößerten Ausschnitt einer mit Fehler behafteten Magnetspur,
- Figur 2: ein Blockschaltbild einer ersten Schaltungsanordnung zum Durchführen des Verfahrens nach der Erfindung,
- Figur 3: nach dem Zweifrequenzcode aufgezeichnete Flußwechsel und Spannungsverläufe, aus denen binäre Informationen ermittelt werden,
- Figur 4: Signalverläufe über der Zeit und die sich daraus ergebenden Zeitabstände der Extremwerte,
- Figur 5: ein Ablaufdiagramm zum Ermitteln und Abspeichern von Zeitabständen,
- Figur 6: ein Ablaufdiagramm zum Ermitteln binärer Informationen mit einer Schaltungsanordnung nach Figur 2,
- Figur 7: ein Blockschaltbild einer weiteren Schaltungsanordnung zum Erfassen binärer Informationen,
- Figur 8: ein Schema der Auswertung des Spannungsverlaufs nach Figur 4 mit einer Schaltungsanordnung nach Figur 7, und
- Figur 9: ein Ablaufdiagramm der Verfahrensschritte zum Ermitteln der binären Informationen unter Verwendung einer Schaltungsanordnung nach Figur 7.

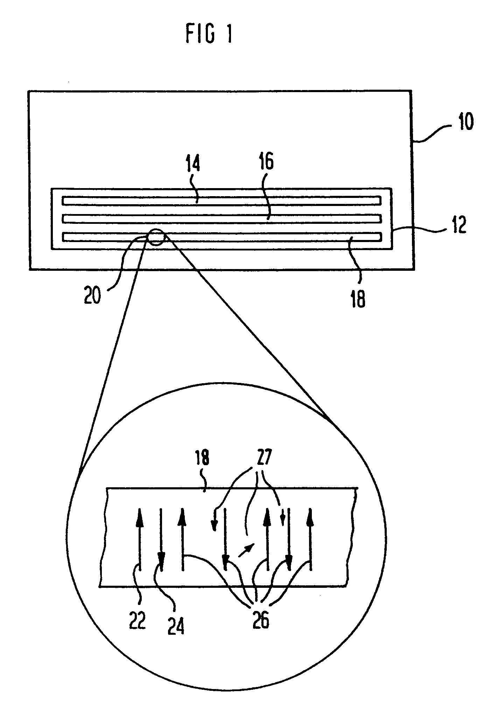

In Figur 1 ist eine Magnetkarte 10 mit einem Magnetstreifen 12 dargestellt, auf dem sich drei Magnetspuren 14, 16, 18 befinden. Ein Abschnitt 20 der Magnetspur 18 ist vergrößert dargestellt. Der Magnetspur 18 sind strichmusterartig magnetische Flüsse 22, 24, 26 eingeprägt. Der Abstand zwischen den magnetischen Flüssen wird abhängig von der binären Information 0 oder 1 variiert. Aufeinander folgende ordnungsgemäße magnetische Flüsse haben jeweils entgegengesetzte Magnetisierungsrichtungen, angedeutet durch Pfeile. Fehler auf der Magnetspur 18, insbesondere Haarrisse und Kratzer, können Störmagnetflüsse 27 mit nicht eindeutig definierten Magnetisierungsrichtungen hervorrufen. Derartige Störmagnetflüsse 27 können falsche binäre Informationen vortäuschen und zur völligen Unbrauchbarkeit der Magnetkarte 10 führen.

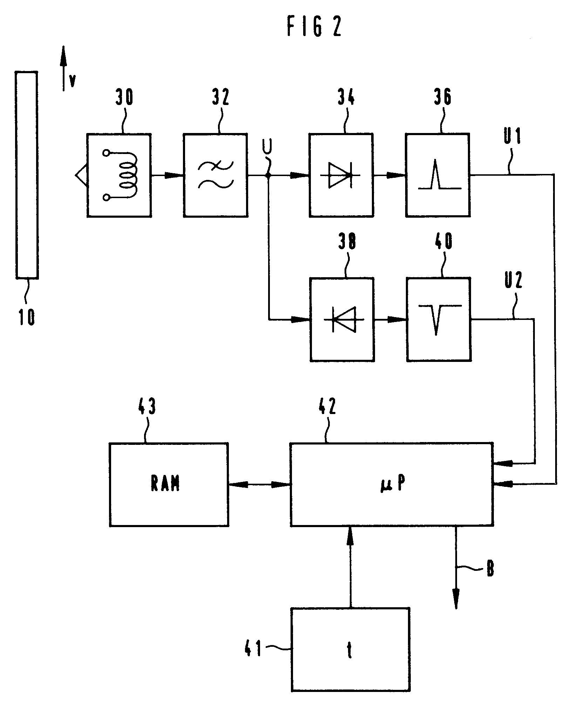

Figur 2 zeigt in einer Blockdarstellung eine an sich bekannte erste Schaltungsanordnung zum Durchführen des Verfahrens nach der Erfindung. Die Magnetkarte 10 wird mit einer Geschwindigkeit v an einem elektromagnetischen Wandler 30 vorbeigeführt, so daß infolge der vom Wandler 30 erfaßten Magnetflußänderungen in seiner Spule eine Spannung induziert wird, von der in einem Tiefpaßfilter 32 die hochfrequenten Schwingungen entfernt werden. Die gefilterte Spannung U wird einem ersten Gleichrichter 34 zugeführt, der den positiven Anteil der Spannung U gleichrichtet und diesen einem Diskriminator 36 zuführt. Der Diskriminator 36 differenziert die ihm zugeführte Spannung und ermittelt so die Extremwerte des positiven Anteils der Spannung U. Zu jedem Zeitpunkt, zu dem ein Extremwert auftritt, gibt der Diskriminator 36 einen Spannungsimpuls U1 ab, der einem Mikroprozessor 42 an seinem Eingang zugeführt wird. Die Spannung U wird auch einem zweiten Gleichrichter 38 zugeführt, der den negativen Anteil der Spannung U gleichrichtet, aus dem ein weiterer Diskriminator 42 die in ihm enthaltenen Extremwerte ermittelt und sie in Form von Spannungsimpulsen U2 dem Mikroprozessor 42 zuführt.

Der Mikroprozessor 42 enthält einen Zeitgeber 41, der Zeitimpulse bereitstellt. Der Mikroprozessor 42 zählt diese Zeitimpulse und ermittelt die Zeitabstände zwischen den Impulsen U1, U2, d.h. die Zeitabstände zwischen den von den Diskriminatoren 36, 40 ermittelten Extremwerten. Die Zeitabstände werden dann als Digitalwerte zusammen mit einer Kennung, die die Richtung des jeweiligen Extremwerts kennzeichnet, in einem Schreib-/Lese-Speicher 43 in der Reihenfolge des Auftretens der Impulse U1, U2 abgespeichert. Zur Ermittlung der binären Informationen werden die gespeicherten Werte gelesen und ausgewertet. Die dabei ermittelten Binärwerte B werden vom Mikroprozessor 42 ausgegeben.

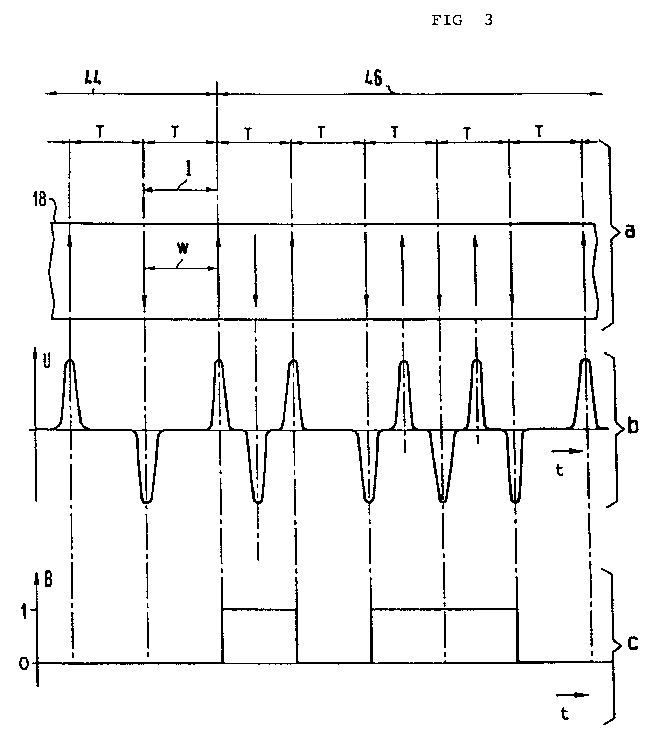

Im folgenden wird anhand der Figur 3 das Grundprinzip der bei der Erfindung verwendeten Zweifrequenzcodierung erläutert. In einem Bildteil a sind Flußwechsel der Magnetspur 18 dargestellt. In vorgegebenen Wegabständen w die bei der Abtastung einer Taktzeit T entsprechen, ist jeweils ein Flußwechsel vorgesehen. Wenn innerhalb einer Taktzeit T ein weiterer Flußwechsel vorkommt, so signalisiert dies den Binärwert 1. Fehlt dieser Flußwechsel, so signalisiert dies den Binärwert 0. Jeder Wegabstand w definiert also eine Informationszelle I, in der ein Binärwert 0 oder 1 abgespeichert sein kann. Bei der Abtastung hat eine solche Informationszelle I die Länge einer Taktzeit T. Die zeitliche Länge der Informationszelle I ist somit durch den Anfangszeitpunkt und den Endzeitpunkt einer Taktzeit T definiert. Bei der vorliegenden Erfindung wird zur Informationsgewinnung das Auftreten von Extremwerten in bezug auf die Taktzeit T ausgewertet.

Im Bildteil b der Figur 3 ist der Verlauf der gefilterten Spannung U dargestellt. Enthält die Magnetspur 18 lediglich Informationen mit dem Binärwert 0, so treten Extremwerte in der Spannung U mit einer Grundfrequenz mit der Periode T auf. Sind in der Magnetspur 18 auch Binärwerte 1 gespeichert, so erhöht sich diese Frequenz auf den doppelten Wert, bzw. es erniedrigt sich die Periode auf die halbe Taktzeit T. Im Bildteil c sind über der Zeit t die zu den einzelnen Informationszellen I gehörigen Binärwerte B dargestellt, die aus dem Verlauf der Spannung U ermittelt werden können.

Die Magnetspur 18 enthält einen Vornullen-Bereich 44 und einen Informationsbereich 46, auf dem die eigentlichen binären Informationen geschrieben sind. Zu Beginn eines Abtastvorganges wird der Vornullen-Bereich 44 abgetastet. Er enthält nur Flußwechsel, die im zeitlichen Abstand der Taktzeit T auftreten und somit den Binärwert 0 darstellen. Aus den zeitlichen Abständen der Extremwerte im Vornullen-Bereich 44 kann somit die Taktzeit T ermittelt werden.

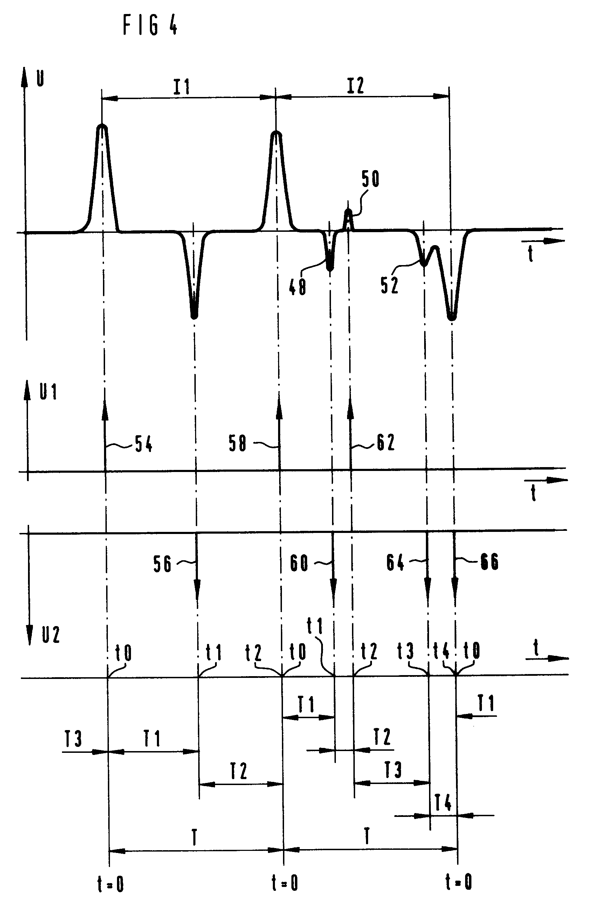

In Figur 4 sind in einem Schaubild die Verfahrensschritte zum Ermitteln der binären Informationen aus einer vom Wandler 30 abgegebenen Spannung U dargestellt, die Störimpulse 48, 50 und 52 enthält, welche z.B. durch Haarrisse oder durch kleine Kratzer auf der Magnetspur 18 hervorgerufen werden können. Gemäß der Schaltungsanordnung nach Figur 2 enthält die vom Diskriminator 36 abgegebene Spannung U1 positive Impulse, angedeutet durch Pfeile, die jeweils beim Auftreten eines Extremwertes mit positiver Richtung in der Spannung U abgegeben werden. Analoges gilt für die Impulse U2 für Extremwerte mit negativer Richtung. Ausgehend von einem ordnungsgemäßen Extremwert 54 wird beginnend mit dem Zeitpunkt t0 ein Zeitabstand T1 gemessen, der zwischen dem Zeitpunkt t0 und dem Zeitpunkt t1 liegt, zu dem der nächste Extremwert 56 auftritt. Nachfolgend wird der Zeitabstand T2 zwischen den Zeitpunkten t1 und t2 ermittelt, zu dem der Impuls 58 auftritt. Wenn die Summe der Zeitabstände T1, T2 gleich der Taktzeit T ist, so wird der Impuls 58 als ordnungsgemäßer Impuls erkannt und zur Informationsgewinnung verwendet. Der Zeitpunkt t2 wird als obere Zeitgrenze für die Informationszelle I1 gewertet, deren Anfangszeitpunkt t0 ist. Die Ermittlung des Informationsgehaltes dieser Informationszelle I1 wird weiter unten erläutert.

Zum Zeitpunkt t2 wird die Zeitzählung zurückgesetzt und die nächste Informationszelle I2 wird beginnend mit dem Zeitpunkt t2 = t0 analysiert. Zu den Zeitpunkten t1, t2 und t3 treten Impulse 60, 62, 64 auf, deren jeweiligen gegenseitige Zeitabstände T1, T2, T3 in der Summe nicht die Taktzeit T ergeben. Erst mit dem Auftreten des Impulses 66 zum Zeitpunkt t4 erreicht die Summe der Zeitabstände T1, T2, T3, T4 den Wert der Taktzeit T, so daß der Impuls 66 als das zeitliche Ende der Informationszelle I2 erkannt und ausgewertet wird. Die Impulse 60, 62, 64 bleiben bei der Informationsgewinnung unberücksichtigt. Somit ist festzustellen, daß zur Summenbildung sämtliche Impulse ausgewertet werden, zur Informationsgewinnung jedoch nur solche, die in vorbestimmten Zeitabständen auftreten.

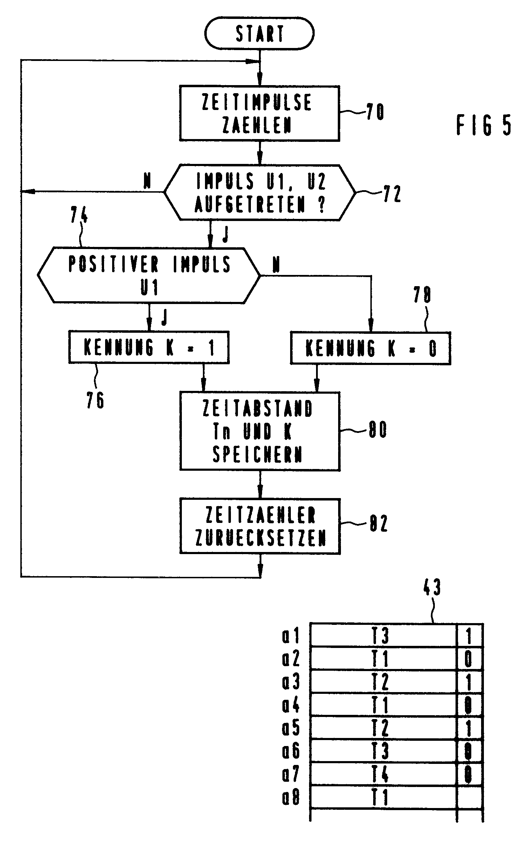

In Figur 5 sind in einem Ablaufdiagramm die Verfahrensschritte angegeben, die beim Erfassen der Impulse U1, U2, die Extremwerten in der Spannung U entsprechen, ausgeführt werden. Diese Verfahrensschritte sind in Form eines Programms gespeichert, das vom Mikroprozessor 52 abgearbeitet wird. Nach dem Start werden im Verfahrensschritt 70 die vom Zeitgeber 41 abgegebenen Zeitimpulse gezählt. Im Schritt 72 wird geprüft, ob ein positiver oder negativer Impuls U1, U2 aufgetreten ist. Wenn dies nicht der Fall ist, wird zum Schritt 70 verzweigt. Andernfalls wird im nachfolgenden Schritt 74 geprüft, ob ein positiver Impuls U1 vorliegt. Wenn dies zutrifft, wird im Schritt 76 eine Kennung K auf den Wert 1 gesetzt, andernfalls erhält die Kennung K den Wert 0 (Verfahrensschritt 78). Im nachfolgenden Schritt 80 wird der beim Zählen der Zeitimpulse ermittelte Zeitabstand Tn (n ist eine Laufvariable mit den Werten 1,2,...,n) zusammen mit der jeweiligen Kennung K im Speicher 43 abgespeichert. Anschließend wird im Schritt 82 der Zeitzähler auf den Wert 0 gesetzt und zum Schritt 70 zurückgegangen. Die Zeitabstände Tn werden in der Reihenfolge ihres Auftretens im Speicher 43 mit aufsteigender Adresse gespeichert. Die bei den in der Figur 4 angegebenen Informationszellen I1, I2 gemessenen Zeitabstände sind zusammen mit den jeweiligen Kennungen unter den Adressen a1 bis a8 gespeichert.

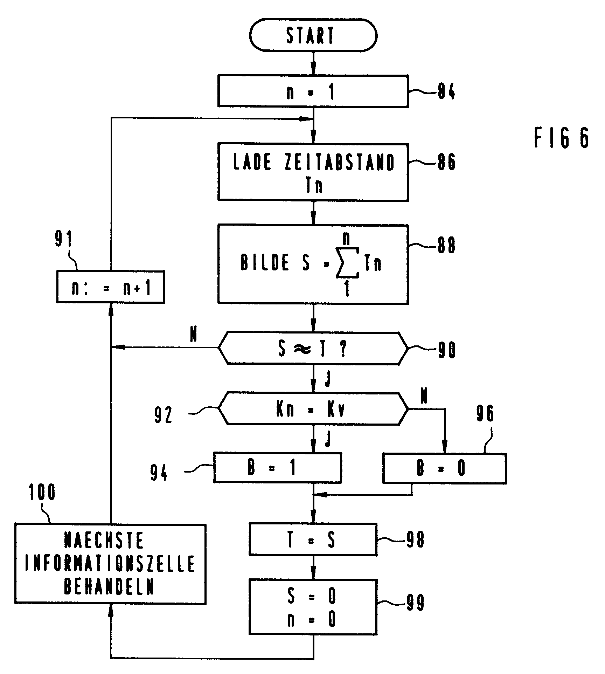

In Figur 6 ist in einem Flußdiagramm die Ermittlung der Binärwerte B auf der Grundlage der gemessenen Zeitabstände Tn und Kennungen K dargestellt. Zu Beginn wird im Schritt 84 die Laufvariable n auf den Wert 1 gesetzt. Im nachfolgenden Schritt 86 wird der Zeitabstand Tn aus dem Speicher 43 geladen, und im Schritt 88 wird die Summe S über die bisherigen Zeitabstände T1 bis Tn der gerade untersuchten Informationszelle gebildet. Im Schritt 90 wird überprüft, ob die Summe S annähernd der Taktzeit T entspricht. Hierzu wird geprüft, ob die Summe S größer oder gleich der Taktzeit T ist. Wenn dies nicht der Fall ist, so wird die Laufvariable n um 1 erhöht (Schritt 91) und der nächste Zeitabstand Tn geladen.

Bei positivem Ergebnis der Prüfung im Schritt 90 wird derjenige Zeitabstand Tn ausgewählt, bei dem die Summe S der Taktzeit T am nächsten kommt, und im nachfolgenden Schritt 92 die Kennung Kn des ausgewählten Zeitabstands Tn mit der Kennung Kv des zuletzt zur Informationsgewinnung verwendeten Zeitabstands verglichen. Bei Übereinstimmung wird der Binärwert B auf den Wert 1 gesetzt (Schritt 94). Bei fehlender Übereinstimmung wird der Binärwert B = 0 ausgegeben (Schritt 96). Bei dem in den Figuren 4 und 5 angegebenen Beispiel ist im Speicher 43 unter der Adresse a1 der Zeitabstand T3 mit der Kennung K = 1 gespeichert. Der zugehörige Impuls 54 zum Zeitpunkt t0 definiert den Beginn der Informationszelle I1. Der unter der Adresse a3 gespeicherte Zeitabstand T2 mit der Kennung K = 1 definiert zum Zeitpunkt t2 die obere Zeitgrenze der Informationszelle I1. Ein Vergleich der unter den Adressen a1 und a3 gespeicherten Kennungen K ergibt also, daß der Informationsgehalt in dieser Informationszelle I1 dem Binärwert B = 1 entspricht. Die Zeitgrenzen der nachfolgenden Informationszelle I2 sind durch die Impulse 58 und 66 (Figur 4) definiert. Die dazugehörigen Zeitabstände T2 und T4 sind im Speicher 43 unter den Adressen a3 und a7 gespeichert. Ein Vergleich der zugehörigen Kennungen K ergibt fehlende Übereinstimmung, d.h. es wird der Binärwert B = 0 ausgegeben.

Im weiteren Verlauf des in der Figur 6 dargestellten Ablaufverfahrens wird im Schritt 98 als neue Taktzeit T die im Schritt 90 ermittelte Summe S verwendet. Diese neue Taktzeit T wird dann für die nächste Informationsgewinnung benutzt. Eine Gleichlaufschwankung beim Abtasten der Magnetspur 18 wird auf dies Weise ausgeglichen. Im nachfolgenden Schritt 99 wird der aktuelle Summenwert S und die Laufvariable n auf den Anfangswert 0 gesetzt und über den Verfahrensschritt 100 wird das Verfahren fortgesetzt, um die nächste Informationszelle auszuwerten.

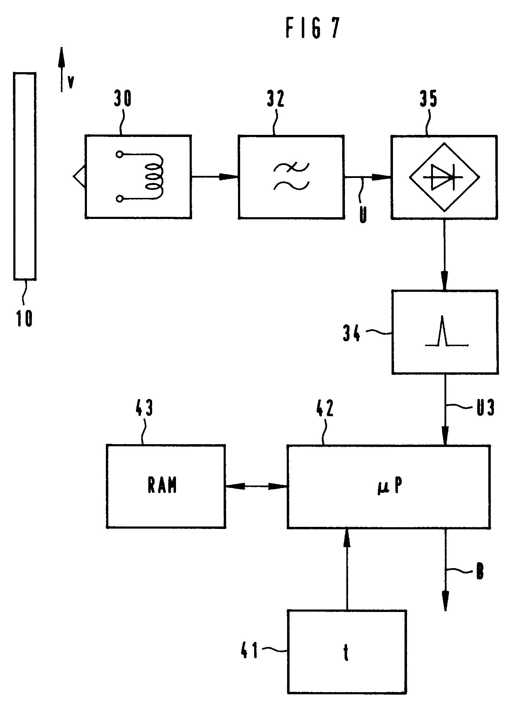

In Figur 7 ist in einer Blockdarstellung eine weitere Schaltungsanordnung angegeben, mit der das Verfahren nach der Erfindung ausgeführt werden kann. Die Schaltungsanordnung stimmt in mehreren Bauteilen mit der in Figur 2 dargestellten überein. Gleiche Bauteile sind gleich bezeichnet und werden nicht erneut beschrieben. Anders als beim Ausführungsbeispiel nach Figur 2 wird im Beispiel nach Figur 7 die gefilterte Spannung U einem Zweiweggleichrichter 35 zugeführt, der dem Diskriminator 34 eine gleichgerichtete Spannung zuführt. Dieser Diskriminator 34 erzeugt bei jedem Extremwert einen Impuls U3, der dem Mikroprozessor 42 zugeführt wird. Da zwischen Extremwerten mit positiver und negativer Richtung nicht mehr unterschieden werden kann, wird die Auswertung auf eine andere Weise als beim Beispiel nach den Figuren 4 bis 6 vorgenommen.

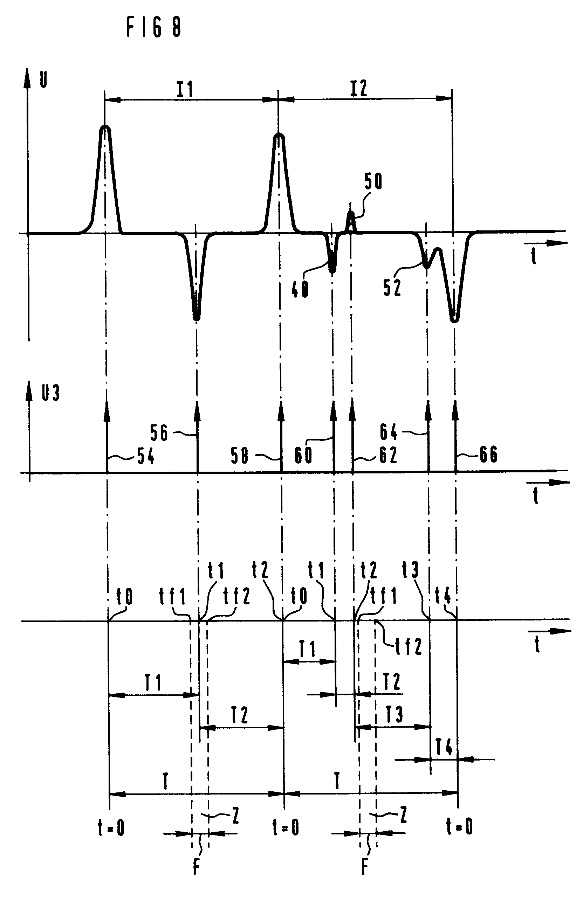

In Figur 8 ist die bei diesem Ausführungsbeispiel verwendete Auswertung schematisch dargestellt. Es wird derselbe Verlauf der Spannung U wie in Figur 4 mit den Störimpulsen 48, 50, 52 angenommen. Der Diskriminator 34 erzeugt bei den in der Spannung U auftretenden Extremwerten die positiven Impulse 54 bis 66. Es werden zunächst in gleicher Weise wie beim Ausführungsbeispiel nach Figur 4 die zu den Informationszellen I1, I2 gehörenden Anfangs- und Endzeitpunkte durch Summenbildung ermittelt, d.h. die Zeitpunkte t0, t2 für die Informationszelle I1 und t0, t4 für die Informationszelle I2. Zum Ermitteln des Binärwerts B wird jeweils in der Mitte einer festgestellten Taktzeit T ein Zeitfenster Z mit der Anfangszeit tf1 und der Endzeit tf2 eingerichtet. Das Zeitfenster Z hat die Länge F. Fällt ein Impuls, wie beispielsweise der Impuls 56, in das Zeitfenster Z, so enthält die betreffende Informationszelle I1 den Binärwert B = 1. Wird innerhalb des Zeitfensters Z kein Impuls festgestellt, wie z.B. bei der Informationszelle I2, so wird der Binärwert B = 0 zugeordnet.

Das Erkennen der Impulse U3 und das Abspeichern der zugehörigen Zeitabstände Tn erfolgt wie im Zusammenhang mit dem Ausführungsbeispiel nach Figur 5 beschrieben, mit dem Unterschied, daß die Schritte 74 bis 78 entfallen können, da zwischen positiven und negativen Impulsen nicht unterschieden werden kann. Dementsprechend sind im Speicher 43 lediglich die Zeitabstände Tn ohne Kennung K abgespeichert.

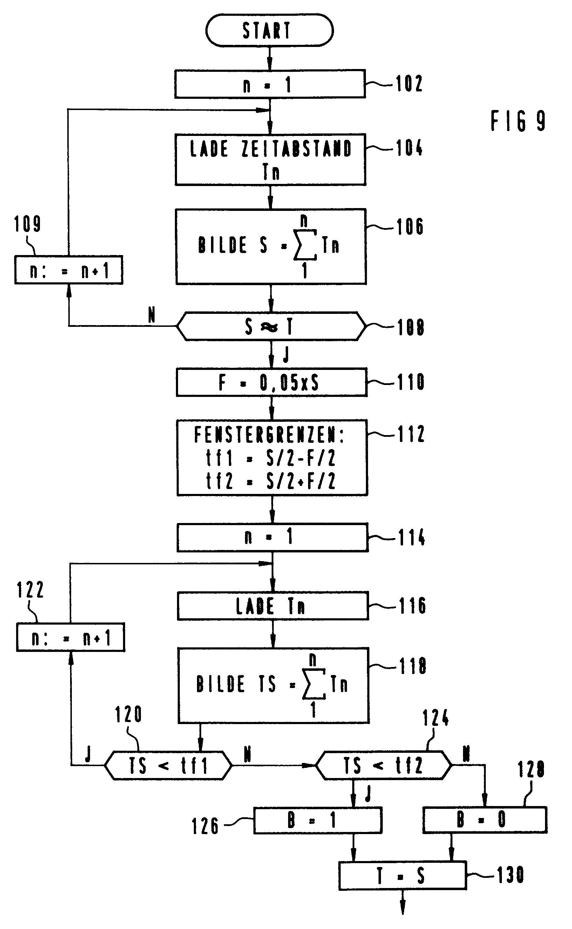

Figur 9 zeigt die Verfahrensschritte zum Ermitteln der Binärwerte B anhand eines Ablaufdiagramms. Die Verfahrensschritte 102 bis 109 stimmen mit den Verfahrensschritten 84 bis 91 des Ausführungsbeispiels nach Figur 6 überein und müssen daher nicht nochmals erläutert werden. Wenn im Schritt 108 festgestellt wird, daß die Summe S der Zeitabstände Tn annähernd der Taktzeit T ist, wird im nachfolgenden Schritt 110 die Fensterbreite F durch Multiplikation der zum ausgewählten Zeitabstand Tn gehörenden Summe S mit einem vorgegebenen Wert, beispielsweise 0,05, ermittelt. Danach werden im Schritt 112 die Anfangszeit tf1 sowie die Endzeit tf2 des Zeitfensters Z nach der dort angegebenen Formel ermittelt. Anschließend wird die Laufvariable n auf den Anfangswert 1 gesetzt (Schritt 114).

Im nachfolgenden Schritt 116 werden die zur betreffenden Informationszelle gehörenden Zeitabstände Tn geladen und im nachfolgenden Schritt 118 die Teilsumme TS über die Zeitabstände Tn gebildet. Im Schritt 120 wird geprüft, ob die Teilsumme TS kleiner als die Anfangszeit tf1 des Zeitfensters Z ist. Wenn dies der Fall ist, so wird die Laufvariable um 1 erhöht (Schritt 122) und der nächste Zeitabstand Tn geladen. Wenn im Schritt 120 das Prüfergebnis negativ ist, so wird im Schritt 124 geprüft, ob die gerade ermittelte Teilsumme TS innerhalb des Zeitfensters Z liegt, d.h. ob sie kleiner als die Endzeit tf2 des Zeitfensters Z ist. Wenn dies der Fall ist, so wird im Schritt 126 der Binärwert auf B = 1 gesetzt, andernfalls wird der Binärwert B = 0 ausgegeben (Schritt 128). Im nachfolgenden Schritt 130 wird als neue Taktzeit T für die Untersuchung der nächsten Informationszelle die gerade ermittelte Summe S verwendet. Anschließend wird die nächste Informationszelle in der oben beschriebenen Weise untersucht.

Das vorgenannte Ausführungsbeispiel kann in vorteilhafter Weise noch weitergebildet sein. So kann die Länge F des Zeitfensters Z abhängig von einer Änderung der Taktzeit T eingestellt werden. Ändert sich die Taktzeit T beim Abtasten mehrerer Informationszellen nicht, so kann die Länge F des Zeitfensters Z relativ klein gewählt werden. Störsignale können so optimal unterdrückt werden. Wird jedoch eine Änderung festgestellt, beispielweise indem die Differenz zwischen den Summen S benachbarter Informationszellen ermittelt und mit einem vorgegebenen Wert verglichen wird, so wird bei einer Überschreitung des vorgegebenen Werts die Länge F des Zeitfensters Z vergrößert, um das Auftreten eines ordnungsgemäßen Extremwertes innerhalb der Taktzeit T zuverlässig zu erfassen. Wird der vorgegebene Wert unterschritten, so kann die Länge F des Zeitfensters Z wieder auf den ursprünglichen kleinen Wert zurückgenommen werden.

Bei einer anderen Variante wird die im Verfahrensschritt 112 (Figur 9) angegebene Formel abgeändert. Als Summe S wird in dieser Formel der Mittelwert aus aktueller Summe S und zuvor ermittelter Summe S verwendet. Die Lage des Zeitfensters Z ist dann optimal und die Länge F des Zeitfensters Z kann dann weiter verringert werden.

Um bei totalem Ausfall eines ordnungsgemäßen Flußwechsels auf der Magnetspur 18 dennoch den richtigen Binärwert B ermitteln zu können, kann eine Verfahrensvariante vorgesehen sein, bei der ein Extremwert am Ende der durch Summenbildung ermittelten Taktzeit T angenommen wird. Als Taktzeit T wird vorzugsweise die zuletzt ermittelte Summe S verwendet. Die Zeitabstände Tn müssen dann bezüglich des angenommenen Extremwerts neu berechnet werden.

## Patentansprüche

1. Verfahren zum Ermitteln binärer Informationen, die auf der Magnetspur einer Magnetspeicherkarte in Form von Flußwechseln nach dem Zweifrequenzcode gespeichert sind, bei dem eine Relativbewegung zwischen der Magnetspeicherkarte und einem elektromagnetischen Wandler erzeugt wird, der eine durch eine Magnetflußänderung induzierte Spannung abgibt, deren Extremwerte festgestellt werden, und bei dem das Auftreten der Extremwerte in Bezug auf eine durch den Zweifrequenzcode definierte Taktzeit zur Informationsgewinnung ausgewertet wird, dadurch **gekennzeichnet,** daß ausgehend von einem zur Informationsgewinnung verwendeten Extremwert (58) die Zeitabstände (T1-T4) aufeinander folgender Extremwerte (60-66) gemessen und addiert werden, und daß der Extremwert (66), bei dem die Summe (S) annähernd der Taktzeit (T) entspricht, zur Informationsgewinnung ausgewertet wird.

2. Verfahren nach Anspruch 1, dadurch **gekennzeichnet,** daß derjenige Extremwert (66) zur Informationsgewinnung ausgewertet wird, bei dem die Summe (S) der Taktzeit (T) am nächsten kommt.

3. Verfahren nach Anspruch 1 oder 2, dadurch **gekennzeichnet,** daß die Taktzeit (T) zu Beginn eines Abtastvorganges mit gleichbleibenden Vorinformationen (44) ermittelt wird.

4. Verfahren nach einem der vorhergehenden Ansprüche, dadurch **gekennzeichnet,** daß die jeweils ermittelte Summe (S) als Taktzeit (T) für die nächste Informationsgewinnung verwendet wird.

5. Verfahren nach einem der vorhergehenden Ansprüche, dadurch **gekennzeichnet,** daß die gemessenen Zeitabstände (T1-T4) in der Reihenfolge ihres Auftretens gespeichert werden und die Informationsgewinnung anhand der gespeicherten Zeitabstände (T1-T4) Werte vorgenommen wird.

6. Verfahren nach Anspruch 5, dadurch **gekennzeichnet,** daß jedem gespeicherten Zeitabstand (T1-T4) eine Kennung (K) zugeordnet wird, die die Richtung seines Extremwerts kennzeichnet.

7. Verfahren nach Anspruch 6, dadurch **gekennzeichnet,** daß zur Informationsgewinnung die Kennung (K) des Zeitabstands, bei dem die Summe (S) annähernd der Taktzeit entspricht, mit der Kennung (K) des Zeitabstands des zuletzt zur Informationsgewinnung verwendeten Extremwerts verglichen wird, und daß bei Übereinstimmung der Kennungen (K) der Binärwert 1 und bei fehlender Übereinstimmung der Binärwert 0 ausgegeben wird.

8. Verfahren nach einem der Ansprüche 1 bis 5, dadurch **gekennzeichnet,** daß in einem innerhalb der Taktzeit (T) liegenden Zeitfenster (Z) überprüft wird, ob ein Extremwert vorhanden ist oder nicht, und daß bei vorhandenem Extremwert der Binärwert 1 und bei fehlendem Extremwert der Binärwert 0 ausgegeben wird.

9. Verfahren nach Anspruch 8, dadurch **gekennzeichnet,** daß das Zeitfenster (Z) in der Mitte der Taktzeit (T) eingerichtet wird, wobei vorzugsweise als Taktzeit (T) die ermittelte Summe (S) verwendet wird, die dem zur Informationsgewinnung auszuwertenden Extremwert (58, 66) zugeordnet ist.

10. Verfahren nach Anspruch 9, dadurch **gekennzeichnet,** daß die Länge (F) Zeitfensters (Z) abhängig von der Taktzeit (T) eingestellt wird und vorzugsweise einen vorgegebenen Bruchteil, z.B. 1/20, der Taktzeit (T) beträgt.

11. Verfahren nach Anspruch 9 oder 10, dadurch **gekennzeichnet,** daß die Länge (F) des Zeitfensters (Z) abhängig von der Änderung der Taktzeit (T) eingestellt wird.

12. Verfahren nach einem der Ansprüche 8 bis 11, dadurch **gekennzeichnet,** daß die Summe der Zeitabstände mit der Taktzeit verglichen wird, daß bei einer einen vorgegebenen Betrag überschreitenden Abweichung ein Extremwert am Ende der Taktzeit angenommen wird, der der Informationsgewinnung zugeführt wird.
